# EUROPÄISCHE PATENTSCHRIFT

(11) **EP 4 286 685 B1**
(45) Veröffentlichungstag und Bekanntmachung des Hinweises auf die Patenterteilung: **17.12.2025**
(21) Anmeldenummer: 23203986.7
(22) Anmeldetag: 16.03.2022
(51) Int. Cl.: F03D 13/20, F03D 80/70

(54) **ROTORLAGERGEHÄUSE, ROTORLAGERANORDNUNG UND WINDENERGIEANLAGE**
ROTOR BEARING HOUSING, ROTOR BEARING ASSEMBLY AND WIND TURBINE
BOÎTIER DE ROULEMENT DE ROTOR, AGENCEMENT DE ROULEMENT DE ROTOR ET ÉOLIENNE

(30) Priorität: 18.03.2021 DE 102021106620
(43) Veröffentlichungstag der Anmeldung: 06.12.2023
(62) Teilanmeldung aus: 22162507.2
(73) Patentinhaber: Nordex Energy SE & Co. KG, 22419 Hamburg (DE)
(72) Erfinder: MUHAMAD, Ibrahim, 22419 Hamburg (DE); FESTNER, Gerald, 22419 Hamburg (DE)
(74) Vertreter: Epping - Hermann - Fischer

(56) Entgegenhaltungen:
- EP-A1- 2 372 150
- EP-A1- 2 740 928
- EP-A1- 2 935 881
- DE-A1- 102018 113 760
- ES-A1- 2 277 795
- US-A1- 2006 104 815
- US-A1- 2019 085 830
- US-A1- 2019 186 467
- US-A1- 2020 102 939

## Beschreibung

Die Erfindung betrifft ein Rotorlagergehäuse für eine Windenergieanlage, eine Rotorlageranordnung sowie eine Windenergieanlage mit einem solchen Rotorlagergehäuse.

Eine Windenergieanlage weist einen Rotor auf, mittels dessen Windenergie in ein Antriebsmoment umgewandelt werden kann, das über einen Triebsstrang einen Generator antreiben kann. Der Triebsstrang, der Generator und andere Komponenten können in einer Gondel montiert sein, die auf einem Turm positioniert ist.

Es ist wünschenswert, ein Rotorlagergehäuse für eine Windenergieanlage anzugeben, das ein zuverlässiges Abstützen eines Rotors und der zugehörigen Rotorwelle ermöglicht. Es ist zudem wünschenswert, eine Rotorlageranordnung für eine Windenergieanlage anzugeben, die ein zuverlässiges Abstützen eines Rotors und der zugehörigen Rotorwelle ermöglicht. Es ist zudem wünschenswert, eine Windenergieanlage anzugeben, die einen verlässlichen Betrieb ermöglicht. EP2935881 A1, EP2740928 A1 und US2020/102939 A1 beschreiben bekannte Rotorlagergehäuse aus dem Stand der Technik.

Gemäß einer Ausführungsform weist ein Rotorlagergehäuse für eine Windenergieanlage auf:
- einen Lagerkörper zur Aufnahme einer Rotorwelle der Windenergieanlage, die sich um eine Drehachse dreht, wobei der Lagerkörper an einem ersten Ende eine erste Aufnahme für ein erstes Rotorlager aufweist und an einem entlang einer Achsrichtung gegenüberliegenden zweiten Ende eine zweite Aufnahme für ein zweites Rotorlager aufweist, wobei der Lagerkörper sich länglich entlang der Achsrichtung erstreckt,
- einen Abstützkörper, der unter dem Lagerkörper angeordnet ist und ausgebildet ist, an einem ersten Ende mit einem Bodenelement gekoppelt zu werden, um einen Kraftfluss zwischen dem Lagerkörper und dem Bodenelement zu übertragen, wobei das Bodenelement unter dem Abstützkörper zur drehbaren Befestigung an einem ersten Ende eines Turms der Windenergieanlage anordenbar ist,

wobei der Lagerkörper und der Abstützkörper gemeinsam einen einstückigen Körper ausbilden und,
wobei der Lagerkörper und der Abstützkörper so ausgebildet sind, dass, wenn ein geometrischer Mittelpunkt der ersten Aufnahme auf eine Querschnittsebene des ersten Endes des Turms projiziert ist, der geometrische Mittelpunkt außerhalb eines Durchmessers des Turms an dem ersten Ende angeordnet ist.

Das Rotorlagergehäuse besteht insbesondere aus einem einstückigen Körper, der beispielsweise durch ein Gussverfahren hergestellt werden kann. Beispielweise ist der Gusskörper mittels eines Sandformverfahrens hergestellt. Beispielsweise weist das Rotorlagergehäuse Sphäroguss auf oder ist aus Sphäroguss gebildet. Unabhängig von Material und Herstellungsverfahren ermöglicht die einstückige Ausbildung eine gute Formstabilität und Steifigkeitsverteilung innerhalb des Rotorlagergehäuses. Ein Kraftfluss innerhalb des Rotorlagergehäuses kann im Betrieb effizient in den Turm abgeleitet werden. Nachträglich herzustellende Verbindungen zwischen den einzelnen Elementen wie beispielsweise zwischen dem Lagerkörper und dem Abstützkörper werden vermieden. Entsprechende Toleranzen derartiger Verbindungen müssen somit nicht berücksichtigt werden. Die nicht notwendigen Montageschritte ermöglichen eine Zeitersparnis. Das einstückige Rotorlagergehäuse ist vergleichsweise einfach zu transportieren. Zudem ist eine platzsparende Bauweise realisierbar, so dass auch Triebsstränge mit Wälzlager mit großen Durchmessern innerhalb vorgegebener Bauräume realisierbar sind.

Die Projektion der ersten Aufnahme auf die Querschnittsebene des ersten Endes des Turms ist im betriebsbereiten Zustand außerhalb des Durchmessers des Turms angeordnet. Unter Projektion der ersten Aufnahme ist insbesondere die Projektion des geometrischen Mittelpunkts der ersten Aufnahme zu verstehen. Das heißt, der geometrische Mittelpunkt der ersten Aufnahme ist in Draufsicht außerhalb des Umfangs des Turmkopfs angeordnet. Der geometrische Mittelpunkt der ersten Aufnahme ist beispielsweise im betriebsbereiten Zustand außerhalb des Durchmessers des Turmanschlusses angeordnet. Der geometrische Mittelpunkt der ersten Aufnahme ist beispielsweise im betriebsbereiten Zustand außerhalb des Turmkopfdurchmessers angeordnet. Der geometrische Mittelpunkt der ersten Aufnahme ist beispielsweise im betriebsbereiten Zustand außerhalb einer Azimutdrehverbindung angeordnet. Beispielsweise ist der geometrische Mittelpunkt der ersten Aufnahme außerhalb des Turmaußendurchmessers angeordnet, insbesondere außerhalb der Turmwand. Beispielsweise ist der geometrische Mittelpunkt der ersten Aufnahme außerhalb des Turminnendurchmessers angeordnet.

Die Anordnung der ersten Aufnahme für das erste Rotorlager ermöglicht einen nutzbringenden Kraftfluss. Die Kräfte und Momente aus dem Triebstrang, also beispielsweise vom Rotor und der Rotorwelle, werden auf idealem Weg mittels des Rotorlagergehäuses in den Turm weitergeleitet. Insbesondere wird ein spitzer Winkel bei der Kraftflussübertragung vermieden. Zudem wird ein ausreichender Abstand zwischen den Rotorblättern und dem Turm gewährleistet. Die Dicht- und Schmiersysteme, die an der ersten Aufnahme vorgesehen werden, sind gut zugänglich, beispielsweise zur Montage und/oder Wartung.

Gemäß zumindest einer weiteren Ausführungsform weist der Abstützkörper an einem mit dem Bodenelement verbindbaren ersten Ende eine kreissymmetrische Form auf. Der Abstützkörper weist bei Querschnitten über dem ersten Ende und parallel zum Bodenelement eine elliptische Grundform auf. Beispielsweise weist der Abstützkörper bei jedem Querschnitt über dem ersten Ende, außerhalb des ersten Endes und parallel zum Bodenelement eine elliptische Grundform auf. Der Abstützkörper ist beispielsweise unmittelbar an das Bodenelement kreisringförmig, vergleichbar wie ein Azimutlager. Die Querschnitte des Abstützkörpers parallel zum Bodenelement beziehungsweise waagrecht beabstandet zum Bodenelement weisen eine Ellipsenform auf beziehungsweise sind ellipsenringförmig.

Die Kombination der kreissymmetrischen Form am Bodenelement und der elliptischen Grundform am restlichen Abstützkörper ermöglicht eine effiziente Kraftübertragung sowie einen geringen Bauraumbedarf. Die kreissymmetrische Form an dem ersten Ende des Abstützkörpers ermöglicht eine gute Kraftübertragung in das Azimutlager sowie eine gute Steifigkeitsverteilung des Abstützkörpers gegenüber einem Innenring und/oder Außenring des Azimutlagers. Die elliptische Grundform des übrigen Abstützkörpers ermöglicht einen guten Kraftfluss zwischen dem Lagerkörper und dem Bodenelement. Zudem ermöglicht die elliptische Grundform eine größere Stützweite zur Stützung des Lagerkörpers als eine entsprechende kreisförmige Grundform an dem zweiten Ende des Abstützkörpers. Um mittels einer kreisförmigen Grundform am zweiten Ende eine gleiche Stützweite wie mit der Ellipsenform zu erreichen, müsste der Kreis einen größeren Durchmesser aufweisen. Im Vergleich dazu ermöglicht die elliptische Grundform eine Einsparung von Material und Bauraum und benötigt daher weniger Platz in der Gondel.

Gemäß zumindest einer weiteren Ausführungsform weist der Abstützkörper eine Verbindungswand auf. Die Verbindungswand erstreckt sich zwischen dem ersten und dem zweiten Ende des Abstützkörpers. Die Verbindungswand weist an der ersten Aufnahme einen ersten Winkel zu einer Haupterstreckungsebene des Bodenelements auf. Die Verbindungswand weist an der zweiten Aufnahme einen zweiten Winkel zu der Haupterstreckungsebene auf. Die beiden Winkel sind zueinander unterschiedlich. Somit ist es beispielsweise möglich, die erste Aufnahme in der Projektion ausreichend von dem Bodenelement außerhalb des Bodenelements zu positionieren. Dabei kann an der zweiten Aufnahme ein anderer Winkel des Abstützkörpers realisiert werden, der beispielsweise auf den Kraftfluss an der zweiten Aufnahme angepasst ist.

Gemäß zumindest einer weiteren Ausführungsform weist der Abstützkörper eine sich ändernde Wanddicke zwischen dem Bodenelement und dem Lagerkörper auf. Beispielsweise ist die Wanddicke ungleichmäßig ausgebildet. Somit ist es beispielsweise möglich, die Wanddicke an im Betrieb auftretende Kraftflüsse anzupassen, so dass eine verlässliche Abstützung realisiert ist bei gleichzeitig geringerem Materialaufwand.

Gemäß zumindest einer weiteren Ausführungsform ist der Abstützkörper an der ersten Aufnahme zwischen dem ersten Ende des Abstützkörpers und dem Lagerkörper in eine erste Richtung geneigt ausgerichtet. Der Abstützkörper ist an der zweiten Aufnahme ebenfalls in die erste Richtung geneigt ausgerichtet. Beispielsweise ist der Abstützkörper ausgehend vom Bodenelement somit in eine Richtung geneigt ausgerichtet, insbesondere in die Richtung, aus der im Betrieb der Wind einströmt. Dies ermöglicht eine Anordnung der Projektion des geometrischen Mittelpunkts der ersten Aufnahme ausreichend weit außerhalb des Turms. Auch andere Ausrichtungen des Abstützkörpers sind möglich, insbesondere ist es auch möglich, dass der Abstützkörper an der ersten Aufnahme in eine andere Richtung geneigt ausgerichtet ist als an der zweiten Aufnahme.

Gemäß zumindest einer Ausführungsform weisen der geometrische Mittelpunkt der ersten Aufnahme und ein geometrischer Mittelpunkt der zweiten Aufnahme entlang einer Querrichtung einen Abstand zueinander auf. Der Abstand der beiden geometrischer Mittelpunkte zueinander ist mindestens so groß wie ein Durchmesser des Turms am ersten Ende des Turms. Die Querrichtung ist um einen vorbestimmten Neigungswinkel zur Achsrichtung versetzt und verläuft quer zur Längsrichtung des Turms.

Gemäß zumindest einer weiteren Ausführungsform weist der geometrische Mittelpunkt der ersten Aufnahme einen größeren Abstand zu der Querschnittsebene des ersten Endes des Turms auf als der geometrische Mittelpunkt der zweiten Aufnahme. Der Lagerkörper ist im Betrieb somit insgesamt geneigt angeordnet, so dass die Rotorblätter weiter vom Turm entfernt anordenbar sind.

Gemäß zumindest einer weiteren Ausführungsform sind die Projektion des geometrischen Mittelpunkts der ersten Aufnahme und eine Projektion des geometrischen Mittelpunkts der zweiten Aufnahme auf die Querschnittsebene jeweils außerhalb des Durchmessers des Turms an dem ersten Ende angeordnet sind. Die Ausdehnung des Lagerkörpers ist beispielsweise länger als der Durchmesser des Turms. Eine verlässliche Abstützung der Rotorwelle wird somit ermöglicht und eine gute Kraftübertragung in den Turm bleibt realisierbar. Gemäß weiterer Ausführungsformen ist die Projektion der zweiten Aufnahme auf die Querschnittsebene des ersten Endes des Turms innerhalb des Durchmessers des Turms angeordnet, so dass Bauraum eingespart werden kann.

Gemäß zumindest einer weiteren Ausführungsform weist der Abstützkörper eine Einstiegsöffnung auf. Die Einstiegsöffnung ist zwischen dem Lagerkörper und dem Abstützkörper angeordnet ist. Somit ist die Einstiegsöffnung von dem ersten Ende des Abstützkörpers beabstandet angeordnet. Dies ermöglicht eine stabile Ausgestaltung des Abstützkörpers an dem ersten Ende ohne Unterbrechungen. Die Einstiegsöffnung ist an einer Position angeordnet an der vergleichsweise weniger Kräfte aufgenommen werden müssen als an dem ersten Ende des Abstützkörpers.

Gemäß zumindest einer weiteren Ausführungsform sind die erste Aufnahme und die zweite Aufnahme unmittelbar durch den Abstützkörper abgestützt. Der Lagerkörper ist teilweise oder vollständig mittels der ersten Aufnahme und der zweiten Aufnahme durch den Abstützkörper abgestützt. Der Abstützkörper liegt insbesondere entlang der Längsrichtung jeweils direkt unter der ersten und zweiten Aufnahme. Somit ist es möglich, die Steifigkeit der Tragstruktur um die jeweiligen Rotorlager herum zu erhöhen. Dies ermöglicht eine günstigere Lastverteilung der Wälzkörper auf deren Laufbahn.

Gemäß zumindest einer weiteren Ausführungsform ist der Lagerkörper zumindest bereichsweise offen, insbesondere an seiner Unterseite. Der Lagerkörper und der Abstützkörper gehen fließend ineinander über und laufen ineinander. Somit ist es möglich, die Einstiegsöffnung groß zu gestallten. Somit wird der Zugang in die Gondel für das Wartungspersonal erleichtert. Somit können beispielsweise Gesundheits- und Sicherheitsrichtlinien verlässlich erfüllt werden. Der offene Lagerkörper ermöglicht einen einfachen Zugang zu den Rotorlagern, beispielweise für Wartungsarbeiten wie Dichtungstausch.

Gemäß zumindest einer Ausführungsform weist eine Rotorlageranordnung ein hier beschriebenes Rotorlagergehäuse auf. Die Rotorlageranordnung weist ein erstes Rotorlager auf, das in der ersten Aufnahme angeordnet ist. Die Rotorlageranordnung weist ein zweites Rotorlager auf, das in der zweiten Aufnahme angeordnet ist. Das erste Rotorlager und das zweite Rotorlager dienen jeweils zur Lagerung der Rotorwelle. Das erste Rotorlager und das zweite Rotorlager sind jeweils Wälzlager, insbesondere Kegelrollenlager oder Schrägkugellager. Wälzlager, insbesondere Kegelrollenlager und Schrägkugellager, nehmen sowohl radiale Kräfte als auch axiale Kräfte auf. Das erste Rotorlager und das zweite Rotorlager sind insbesondere spiegelbildlich angeordnet und werden in O- oder X-Anordnung gegeneinander verspannt. Das erste Rotorlager und das zweite Rotorlager können die gleichen Dimensionen haben oder unterschiedliche.

Gemäß einer Ausführungsform weist eine Windenergieanlage einen Turm, eine Gondel und einen Rotor mit einer Rotorwelle auf. Die Windenergieanlage weist ein Rotorlagergehäuse gemäß zumindest einer der hier beschriebenen Ausführungsformen auf. Das Rotorlagergehäuse ist in der Gondel angeordnet. Das Rotorlagergehäuse ist an einem ersten Ende des Turms an dem Turm drehbar befestigt. Die Rotorwelle erstreckt sich durch den Lagerkörper hindurch. Die erste Aufnahme ist dem Rotor zugewandt. Die zweite Aufnahme ist dem Rotor abgewandt. Die dem Rotor zugewandte Aufnahme ist in Projektion außerhalb des Turms angeordnet. Dies ermöglicht den effizienten Kraftfluss zum Abstützen der Rotorwelle innerhalb des Rotorlagergehäuses und zum Weiterleiten von Kräften und Momenten in den Turm.

Die beschriebenen Vorteile und Weiterbildungen des Rotorlagergehäuses gelten auch für die Windenergieanlage und umgekehrt.

Gemäß zumindest einer weiteren Ausführungsform ist das erste Rotorlager in der ersten Aufnahme angeordnet. Wenn ein geometrischer Mittelpunkt des ersten Rotorlagers auf eine Querschnittsebene des ersten Endes des Turms projiziert ist, ist der geometrische Mittelpunkt des ersten Rotorlagers am ersten Ende des Turms außerhalb des Turms angeordnet. Das Rotorlagergehäuse ist also so dimensioniert, dass das erste Rotorlager am ersten Ende des Turms vor dem Turm angeordnet ist. Dies ermöglicht eine große Spannweite zur Übertragung von Lasten auf den Turm.

Gemäß zumindest einer weiteren Ausführungsform ist das erste Rotorlager im Betrieb einem einströmenden Wind zugewandt. Der Rotor wird von einer dem ersten Rotorlager abgewandten Seite im Betrieb von Wind angeströmt. Das erste Rotorlager ist in Bezug auf den einströmenden Wind vor dem Turm angeordnet.

Gemäß zumindest einer Ausführungsform umschließt der Lagerkörper die Rotorwelle. Das Rotorlagergehäuse umgibt die Rotorwelle entlang des Umfangs der Rotorwelle im Bereich des Rotorlagergehäuses vollständig. Die Rotorwelle kann entlang der Achsrichtung in Richtung des Rotors und in eine entgegengesetzte Richtung aus dem Lagerkörper hervorstehen. An der ersten Aufnahme und an der zweiten Aufnahme ist jeweils eine Aufnahme vorgesehen, um jeweils ein erstes bzw. ein zweites Rotorlager aufzunehmen, das zur Lagerung der Rotorwelle vorgesehen ist. Zwischen der ersten Aufnahme und der zweiten Aufnahme umgibt der Lagerkörper die Rotorwelle in radialer Richtung vollständig. Insbesondere umgibt das Rotorlagergehäuse zwischen der ersten Aufnahme und der zweiten Aufnahme die Rotorwelle in radialer Richtung vollständig.

Gemäß zumindest einer Ausführungsform ist das zweite Rotorlager in der zweiten Aufnahme angeordnet. Das Rotorlagergehäuse ist so ausgebildet, dass ein Abstand zwischen dem geometrischen Mittelpunkt des ersten Rotorlagers und dem geometrischen Mittelpunkt des zweiten Rotorlagers größer ist als ein Durchmesser des Turms am ersten Ende des Turms. Das Rotorlagergehäuse mit dem Abstützkörper und der Anordnung des ersten Rotorlagers außerhalb des Turms am ersten Ende des Turms ermöglicht den größeren Abstand zwischen dem ersten Rotorlager und dem zweiten Rotorlager in Bezug auf den Durchmesser des Turms am ersten Ende des Turms. Dies ermöglicht eine große Stützweite zur Stützung des Lagerkörpers unabhängig von dem Durchmesser des Turms am ersten Ende des Turms.

Gemäß zumindest einer Ausführungsform weist die Windenergieanlage das Bodenelement auf. Das Bodenelement ist einem Azimutsystem zugeordnet, das zum drehbaren Befestigen des Rotorlagergehäuses an dem ersten Ende des Turms vorgesehen ist. Das Bodenelement ist am ersten Ende des Abstützkörpers mit dem Abstützkörper gekoppelt, beispielsweise verschraubt.

Die Windenergieanlage mit dem hier beschriebenen Rotorlagergehäuse ermöglicht eine Vormontage und Voreinstellung der Rotorlager, bevor das Rotorlagergehäuse in der Gondel montiert wird. Im Schadensfall oder zur Wartung können die Rotorlager aus dem Rotorlagergehäuse entfernt werden, die Gondel muss hierfür nicht komplett abgenommen werden oder der Triebstrang komplett in Einzelteile zerlegt werden. Insgesamt ermöglicht das Rotorlagergehäuse eine Aufteilung der Windenergieanlage in Module mit zulässigen Transportmassen. Die Windenergieanlage ist mit großem Wälzlagerdurchmesser auch bei vorgegebenem Bauraum in der Gondel realisierbar.

Weitere Vorteile, Merkmale und Weiterbildungen ergeben sich aus den nachfolgenden in Verbindung mit den Figuren erläuterten Ausführungsbeispielen. Gleiche, gleichartige und gleichwirkende Elemente können mit den gleichen Bezugszeichen versehen sein.

Es zeigen:
Figur 1 eine schematische Darstellung einer Windenergieanlage gemäß einem Ausführungsbeispiel,
Figur 2 eine schematische Darstellung eines Rotorlagergehäuses gemäß einem Ausführungsbeispiel,
Figuren 3 und 4 schematische Darstellungen eines Rotorlagergehäuses gemäß einem Ausführungsbeispiel,
Figuren 5 bis 8 schematische Darstellungen von Abstützkörpern gemäß verschiedenen Ausführungsbeispielen,
Figur 9 eine schematische Darstellung eines Teils einer Windenergieanlage gemäß einem Ausführungsbeispiel,
Figuren 10 bis 12 schematische Darstellungen eines Rotorlagergehäuses gemäß einem Ausführungsbeispiel,
Figuren 13 und 14 schematische Darstellungen eines Rotorlagergehäuses gemäß einem Ausführungsbeispiel, und
Figuren 15 und 16 schematische Darstellungen eines Rotorlagergehäuses gemäß einem Ausführungsbeispiel.

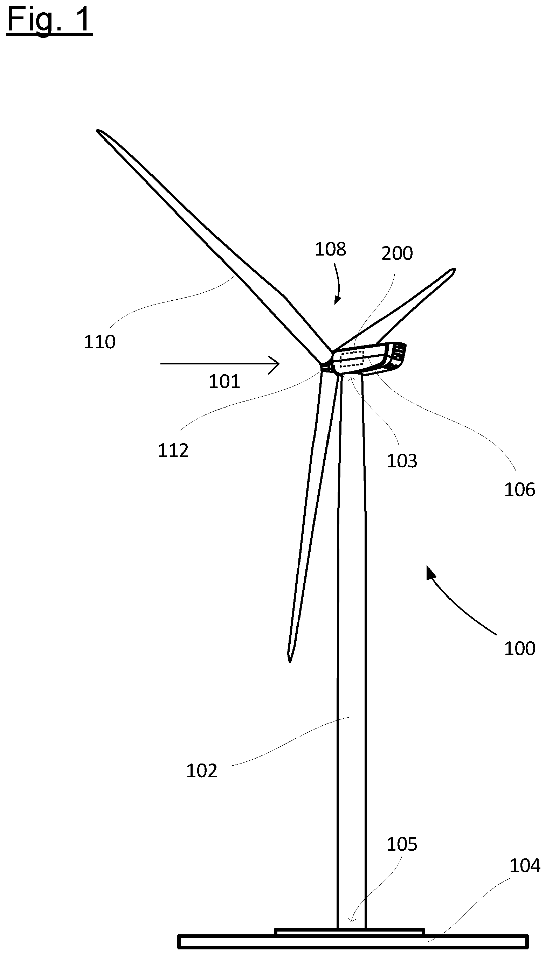

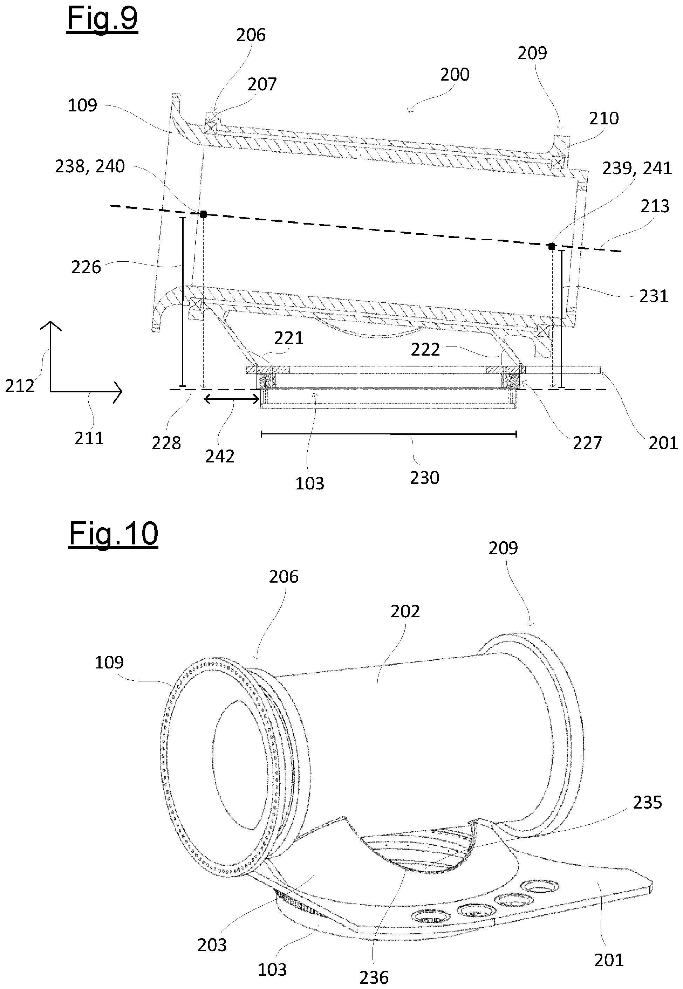

Figur 1 zeigt eine schematische Darstellung einer Windenergieanlage 100 gemäß einem Ausführungsbeispiel. Die Windenergieanlage 100 weist einen Turm 102 auf. Der Turm 102 ist an einem zweiten Ende 105 des Turms 102 mittels eines Fundaments 104 auf einem Untergrund befestigt. An einem dem Untergrund gegenüberliegenden ersten Ende 103 des Turms 102 ist eine Gondel 106 drehbar gelagert. Die Gondel 106 weist beispielsweise einen Generator auf, der über einen Triebstrang mit einem Rotor 108 gekoppelt ist. Der Triebstrang weist beispielsweise eine Rotorwelle 109 (Figur 9), ein Getriebe, eine Kupplung, eine Rotorbremse und sonstige Komponenten auf. Der Rotor 108 weist beispielsweise ein oder mehrere Rotorblätter 110 auf, die an einer Rotornabe 112 angeordnet sind. Die Rotornabe 112 wiederum ist mit der Rotorwelle 109 verbunden. Die Rotorwelle 109 ist in der Gondel 106 in einem Rotorlagergehäuse 200 drehbar gelagert. Einströmender Wind 101 strömt aus Richtung des Rotors 108 an die Windenergieanlage 100, so dass der Wind zuerst zum Rotor 108 gelangt und nachfolgend zum Turm 102. Die Windenergieanlage 100 ist also insbesondere ein sogenannter Luv-Läufer.

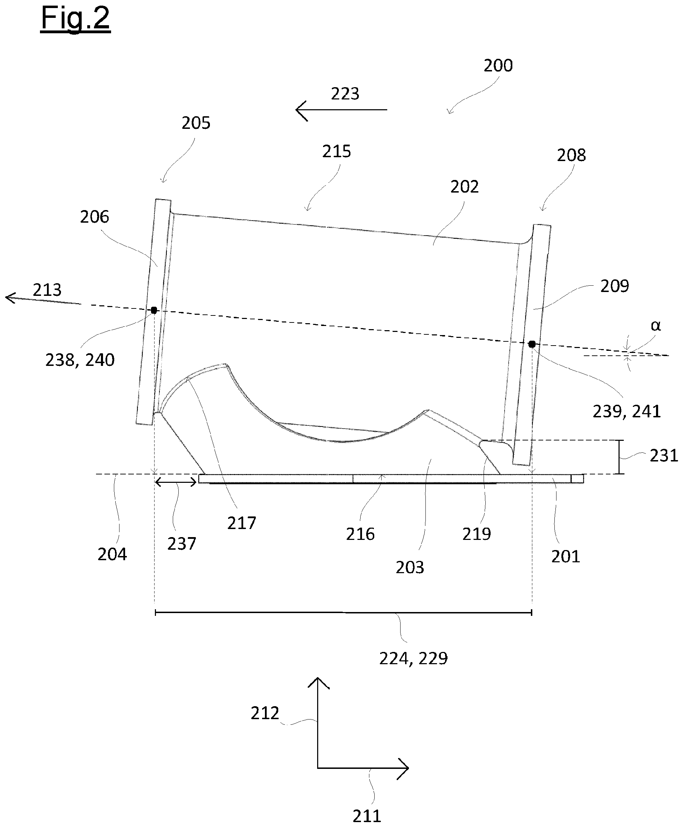

Figur 2 zeigt das Rotorlagergehäuse 200 gemäß einem Ausführungsbeispiel. Das Rotorlagergehäuse 200 ist auf einem Bodenelement 201 beispielsweise durch eine Schraubverbindung befestigt. Das Rotorlagergehäuse 200 ist aus einem einzigen Körper 215 einstückig ausgebildet. Insbesondere besteht das Rotorlagergehäuse 200 nicht aus mehreren zusammenverbundenen Bestandteile, sondern ist ohne Schraubverbindungen oder ähnlichem als ein einziger Gehäusekörper ausgebildet. Insbesondere ist das gesamte Rotorlagergehäuse 200 als ein zusammenhängendes Bauteil mittels eines einzigen Gussprozesses hergestellt.

Das Bodenelement, auf welchem das Rotorlagergehäuse 200 fixiert ist, ist entlang einer Längsrichtung 212, die insbesondere einer Hauptausbreitungsrichtung des Turms 102 entspricht, im Betrieb dem Turm 102 zugewandt. Das Bodenelement 201 gehört zu einem Azimutsystem, das eine drehbare Kopplung des Rotorlagergehäuses 200 mit dem Turm 102 ermöglicht (Figur 9).

Entlang der Längsrichtung 212 ist auf einer dem Turm 102 abgewandten Seite des Bodenelements 201 ein Abstützkörper 203 vorgesehen, der Bestandteil des Rotorlagergehäuses 200 ist. Der Abstützkörper 203 erstreckt sich entlang der Längsrichtung 212 zwischen einem ersten Ende 216 und einem zweiten Ende 217 des Abstützkörpers 203. Das erste Ende 216 des Abstützkörpers 203 schließt an das Bodenelement 201 an.

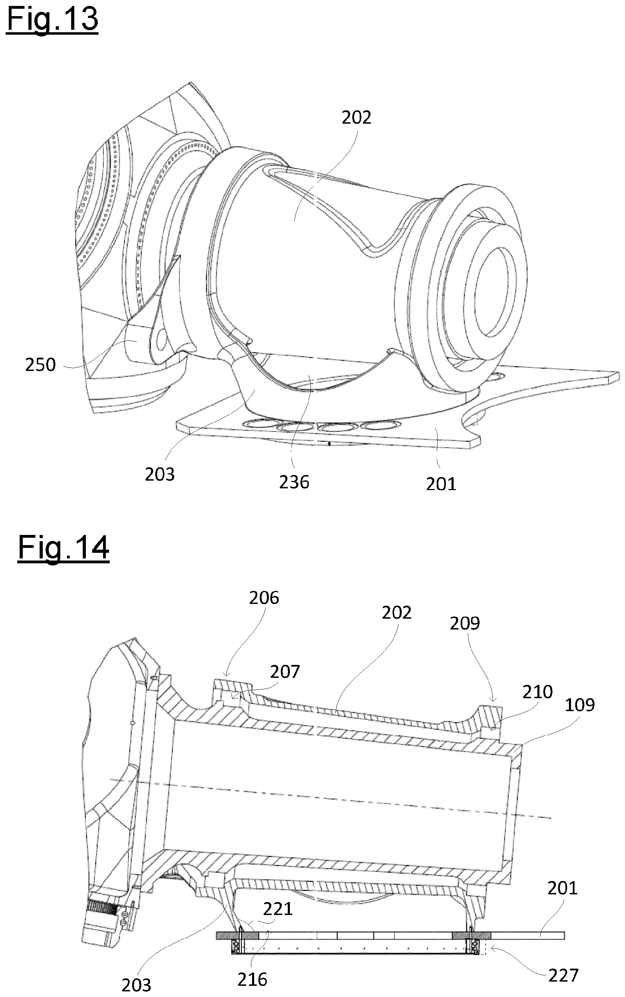

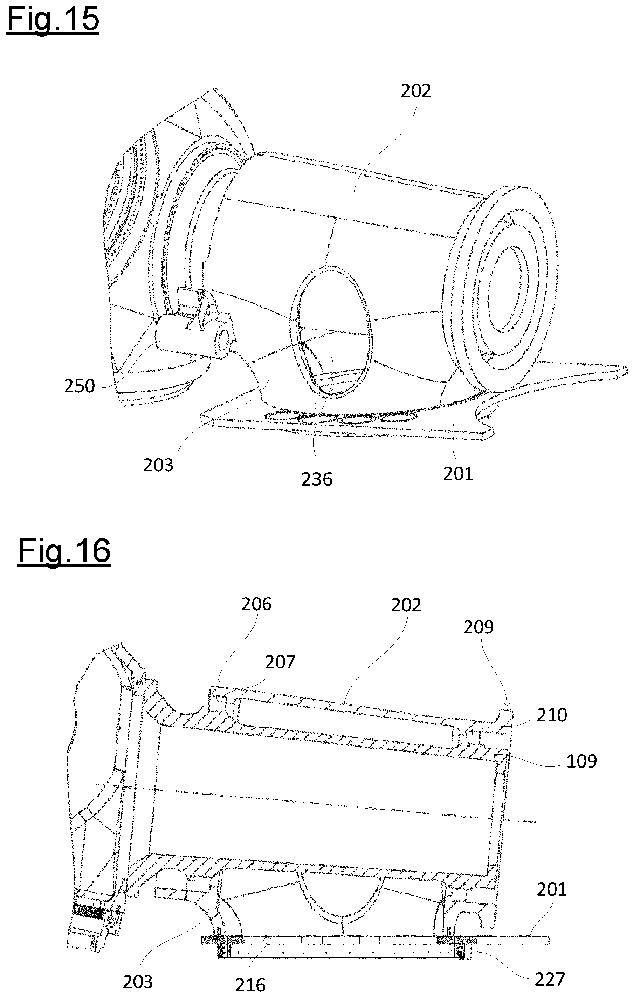

Das zweite Ende 217 des Abstützkörpers 203 schließt an einen Lagerkörper 202 an, der auch Bestandteil des Rotorlagergehäuses 200 ist. Der Lagerkörper 202 dient zum Abstützen und rotierbarem Lagern der Rotorwelle 109. Der Lagerkörper 202 ist durch den Abstützkörper 203 abgestützt. Entlang der Längsrichtung 212 ist der Abstützkörper 203 zwischen dem Bodenelement 201 und dem Lagerkörper 202 angeordnet. Beispielsweise ist an einer dem Rotor zugewandten Seite eine Rotorarretiervorrichtung 250 (Figuren 13 und 15) vorgesehen, die beispielsweise an dem Rotorlagergehäuse 200 befestigt oder einstückig in dem Rotorlagergehäuse 200 ausgebildet ist. Mittels der Rotorarretiervorrichtung 250 ist der Rotor 108 arretierbar. Somit ist es möglich, eine Rotation des Rotors 108 zu blockieren, beispielsweise während einer Wartung.

Der Lagerkörper 202 erstreckt sich beispielsweise hohlzylinderförmig oder hohlkegelstumpfförmig entlang einer Achsrichtung 213, die durch die Drehachse 213 der Rotorwelle 109 festgelegt ist. Die Achsrichtung 213 ist um einen Neigungswinkel α zu einer Querrichtung 211 versetzt. Der Neigungswinkel α liegt üblicherweise zwischen 2° und 8°. Allerdings sind andere Winkelwerte denkbar. Die Querrichtung 211 verläuft quer zur Längsrichtung 212 und insbesondere quer zur Längsrichtung des Turms 102.

An einem ersten Ende 205 des Lagerkörpers 202 ist eine erste Aufnahme 206 für ein erstes Rotorlager 207 (Figur 9) ausgebildet. Das erste Ende 205 des Lagerkörpers 202 ist im Betrieb dem Rotor 108 zugewandt. Entlang der Achsrichtung 213 dem ersten Ende 205 abgewandt weist der Lagerkörper 202 ein zweites Ende 208 auf. Am zweiten Ende 208 des Lagerkörpers 202 ist eine zweite Aufnahme 209 für ein zweites Rotorlager 210 (Figur 9) vorgesehen. Im betriebsfertigen Zustand sind das erste Rotorlager 207 und das zweite Rotorlager 210 im Rotorlagergehäuse 200 angeordnet, um eine drehbare Verbindung zwischen dem Rotorlagergehäuse 200 und der Rotorwelle 109 auszubilden.

Die Rotorwelle 109 ist im betriebsfertigen Zustand um die Drehachse 213 (Figur 9) relativ zum Rotorlagergehäuse 200 rotierbar.

Das Bodenelement 201 weist eine Haupterstreckungsebene 204 auf. Das Bodenelement 201 weist in der Haupterstreckungsebene 204 seine größte Ausdehnung auf. Entlang der Haupterstreckungsebene 204 ist das Bodenelement 201 größer ausgedehnt, als quer zur Haupterstreckungsebene 204. Das Bodenelement 201 kann beispielsweise in Form eines Rings, einer Platte oder einer Scheibe ausgebildet sein. Beispielsweise ist das Bodenelement 201 ausgebildet wie in der DE 10 2007 009 575 B4 beschrieben, zum Bespiel wie in Absatz 14 dieses Dokuments.

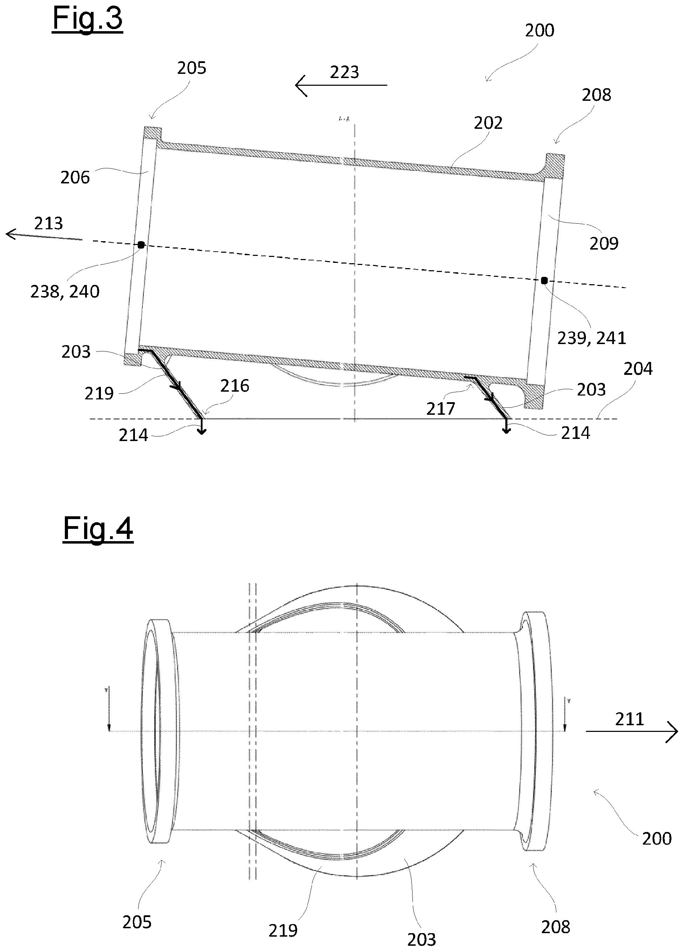

In Projektion auf die Haupterstreckungsebene 204, die beispielsweise gleichgerichtet zur der Querschnittsebene 228 ist, ist insbesondere die erste Aufnahme 206 außerhalb beziehungsweise vor dem Bodenelement 201 angeordnet. Der Abstützkörper 203 weist einen vorspringenden Bereich 237 auf, der entlang der Querrichtung 211 über dem Bodenelement 201 vorspringt. Somit ist eine Anordnung der ersten Aufnahme 206 und damit des ersten Rotorlagers 207 entlang der Querrichtung 211 vor dem Querschnitt des Turms 102 an dem ersten Ende 103 des Turms 102 realisiert. Die zweite Aufnahme 209 ist gemäß Ausführungsbeispielen ebenfalls in Projektion auf die Haupterstreckungsebene 204 außerhalb des Querschnitts des Turms 102 an dem ersten Ende 103 des Turms 102 angeordnet. Gemäß weiteren Ausführungsbeispielen ist die zweite Aufnahme 209 in Projektion auf eine Querschnittsebene 228 (Figur 9) des Turms 102 an dem ersten Ende 103 des Turms 102 innerhalb des Turmquerschnitts angeordnet. Insbesondere ist zumindest ein geometrischer Mittelpunkt 238 (Figur 3) der ersten Aufnahme 206 in Projektion auf die Querschnittsebene 228 des Turms 102 am ersten Ende 103 des Turms 102 außerhalb des Turmquerschnitts angeordnet.

Als geometrischer Mittelpunkt 238, 239, 240, 241 wird insbesondere der Punkt bezeichnet, der einer Mittelung aller Punkte innerhalb der Aufnahme 206, 209 oder des Rotorlagers 207, 210 entspricht. Beispielsweise weist die Innenwand der Aufnahme 206, 209 oder des Rotorlagers 207, 210 entlang der Ringform der Innenwand überall im Wesentlichen den gleichen Abstand zu dem geometrischen Mittelpunkt 238, 239, 240, 241 auf. Die Kreisform der Aufnahme 206, 209 oder des Rotorlagers 207, 210 ist bei konstantem Radius um den geometrischen Mittelpunkt 238, 239, 240, 241 gebildet.

Der Lagerkörper 202 ist in Bezug auf die Längsrichtung 212 geneigt angeordnet. Insbesondere ist der Lagerkörper 202 in Bezug auf das Bodenelement 201 geneigt. Der geometrische Mittelpunkt 238 der ersten Aufnahme 206 weist einen ersten Abstand 226 zwischen dem geometrische Mittelpunkt 238 und der Querschnittsebene 228 auf (Figur 9). Der erste Abstand 226 an der ersten Aufnahme 206 ist größer als ein zweiter Abstand 231 zwischen dem geometrischen Mittelpunkt 239 der zweiten Aufnahme 209 und der Querschnittsebene 228.

Der Lagerkörper 202 ist so ausgebildet, dass zwischen der ersten Aufnahme 206 und der zweiten Aufnahme 209 entlang der Querrichtung 211 ein Abstand 224 ausgebildet ist. Der Lagerkörper 202 ist insbesondere so ausgebildet, dass zwischen den beiden geometrischen Mittelpunkten 238, 239 entlang der Querrichtung 211 der Abstand 224 ausgebildet ist. Der Abstand 224 ist größer als ein Durchmesser des ersten Endes 103 des Turms 102 entlang der Querrichtung 211. Insbesondere ist der Abstand 224 größer als der Durchmesser 230 des ersten Endes 103 des Turms 102 unabhängig davon, ob die zweite Aufnahme 209 in Projektion auf die Haupterstreckungsebene 204 innerhalb oder außerhalb des ersten Endes 103 des Turms 102 angeordnet ist. Die erste Aufnahme 209 ist entsprechend weit vor dem ersten Ende 103 des Turms 102 angeordnet beziehungsweise springt der vorspringende Bereich 242 ausreichend weit über den Turm 102 am ersten Ende 103 vor, so dass der Abstand 224 stets größer als der Durchmesser 230 des ersten Endes 103 des Turms 102 ist. Beispielsweise ist ein Mindestabstand zwischen dem geometrischen Mittelpunkt 238 und dem Turmdurchmesser 230 mindestens 3 cm, mindestens 10 cm oder mindestens 50 cm. Beispielsweise ist ein Mindestabstand zwischen dem geometrischen Mittelpunkt 238 und dem Turmdurchmesser 230 mindestens so groß wie ein Viertel der Wälzkörperlänge, mindestens so groß wie die Hälfte der Wälzkörperlänge, mindestens so groß wie die Wälzkörperlänge oder größer als die Wälzkörperlänge.

Figuren 3 und 4 zeigen das Rotorlagergehäuse 200 in weiteren Ansichten.

Wie sich aus der Schnittansicht der Figur 3 ergibt, weist der Abstützkörper 203 eine Verbindungswand 219 auf, die einen Hohlraum umgibt und die den Lagerkörper 202 mit dem Bodenelement 201 verbindet. Ein Kraftfluss 214 wird im Betrieb von den Rotorlagern 207, 210 in den Lagerkörper 202 übertragen. Der Kraftfluss 214 verteilt sich dann über den Umfang des Abstützkörpers 203 und wird auf das Bodenelement 201 weiter übertragen. Von dem Bodenelement 201 ist der Kraftfluss 214 in den Turm 102 ableitbar.

Beispielsweise ist der Abstützkörper 203 in eine erste Richtung 223 geneigt. Insbesondere ist die erste Richtung 223 der Richtung des im Betrieb einströmenden Winds 101 entgegengesetzt. Der Abstützkörper 203 ist ausgehend von dem Bodenelement 201 in Richtung des Rotors 108 geneigt. Dies ermöglicht die Anordnung der Projektion des ersten Rotorlagers 207 ausreichend weit außerhalb und vor dem Turm 102 am ersten Ende 103.

Das Bodenelement 201 umgibt den Abstützkörper 203 insbesondere vollumfänglich. Die Kontur des Bodenelements 201 kann beispielsweise eine Kreisform oder sonstige Formen (wie in Figur 10) aufweisen.

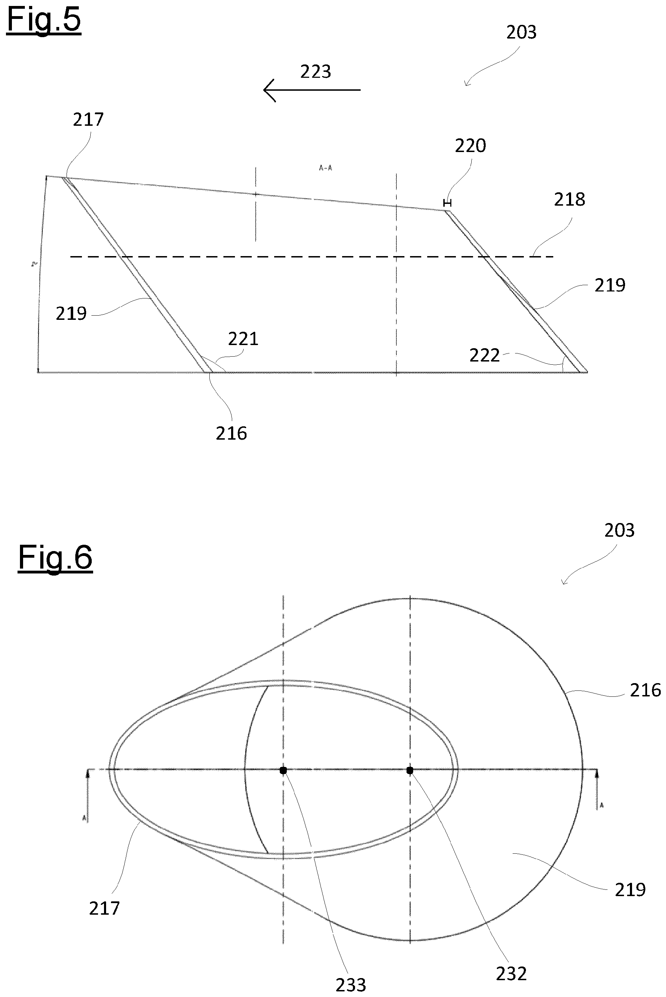

Die Neigung und Ausgestaltung der Verbindungswand 219 beziehungsweise die gesamte Form des Abstützkörpers 203 kann auf unterschiedliche Weise in unterschiedlichen Ausführungsbeispielen verschieden zueinander realisiert sein, wie sich beispielsweise aus den Figuren 5 bis 8 ergibt. Insbesondere ist es möglich, dass die Verbindungswand 219 an der ersten Aufnahme 206 und an der zweiten Aufnahme 209 gleichgerichtet geneigt ist. Es ist auch möglich, dass die Verbindungswand 219 an der ersten Aufnahme 206 in eine entgegengesetzte Richtung geneigt ist als an der zweiten Aufnahme 209. Die Verbindungswand 219 ist gemäß Ausführungsbeispielen in die erste Richtung 223 geneigt. Gemäß weiteren Ausführungsbeispielen ist die Verbindungswand 219 zumindest abschnittsweise entgegen der ersten Richtung 223 geneigt.

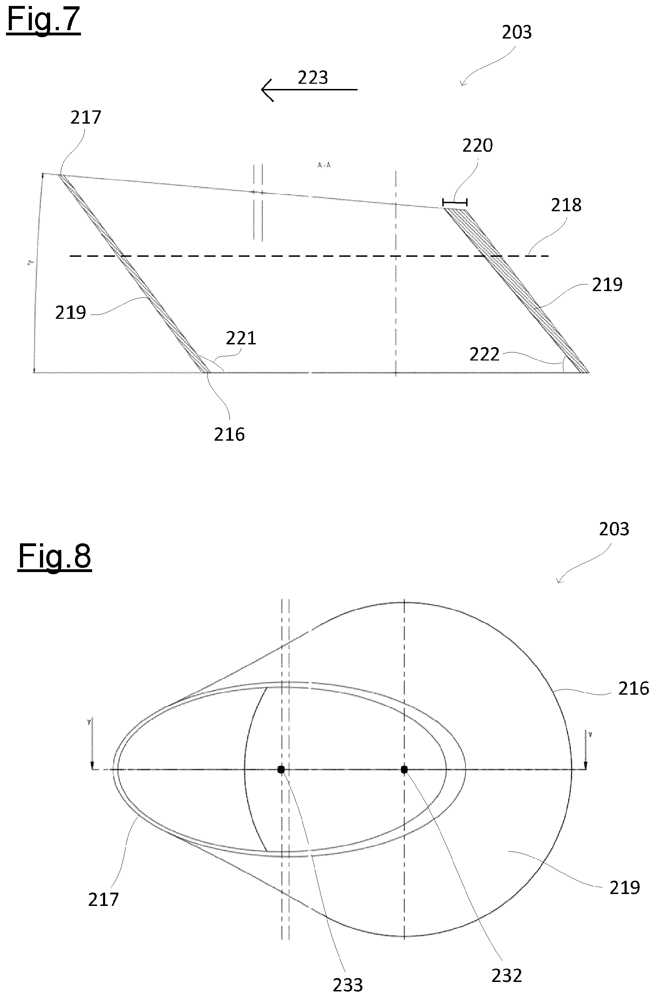

Den verschiedenen Ausführungsbeispielen ist gemein, dass der Abstützkörper 203 an den dem Bodenelement 201 zugewandten ersten Ende 216 des Abstützkörpers 203 eine kreisförmige Grundform aufweist, wie sich beispielsweise aus Figuren 6 und 8 ergibt. Beabstandet von dem ersten Ende 216 weist der Abstützkörper 203 eine von der Kreisform abweichende Form auf. Ein Querschnitt 218 entlang der Querrichtung 211 und quer zur Längsrichtung 212 des Abstützkörpers 202 weist beispielsweise eine elliptische Form auf, wie sich beispielsweise ebenfalls aus den Figuren 6 und 8 ergibt. Dies gilt für jeden Querschnitt, der sich über das erste Ende 216 befindet. Die Verbindungwand 219 weist somit einen Übergang von der Kreisform am ersten Ende 216 zu einer elliptischen Grundform auf.

Ein Mittelpunkt 232 der Kreisform am ersten Ende 216 des Abstützkörpers 203 ist insbesondere von einem Mittelpunkt 233 der elliptischen Form des Abstützkörpers 203 beabstandet vom ersten Ende 216 verschieden. Beispielsweise sind die Mittelpunkte 232, 233 entlang der ersten Richtung 223 zueinander verschoben. Somit ist beispielsweise die Neigung des Abstützkörpers 203 in die erste Richtung 223 realisiert.

An der ersten Aufnahme 206 weist die Verbindungswand 219 einen ersten Winkel 221 zu der Haupterstreckungsebene 204 beziehungsweise zu einer Innenseite des Bodenelements 201 auf. Der erste Winkel 221 ist insbesondere innerhalb des Abstützkörpers 203. An der zweiten Aufnahme 209 ist ein zweiter Winkel 222 zwischen der Verbindungswand 219 und der Haupterstreckungsebene 204 beziehungsweise einer Innenseite des Bodenelements 201 ausgebildet. Der zweite Winkel 222 ist ebenfalls innerhalb des Abstützkörpers 203.

Der erste Winkel 221 und der zweite Winkel 222 sind beispielsweise unterschiedlich zueinander. Es ist auch möglich, dass der erste Winkel 221 und der zweite Winkel 222 gleich sind. Der erste Winkel 221 ist gemäß Ausführungsbeispielen ein spitzer Winkel, ein rechter Winkel oder ein stumpfer Winkel. Der zweite Winkel 222 ist gemäß Ausführungsbeispielen ein spitzer Winkel, ein rechter Winkel oder ein stumpfer Winkel. Beispielsweise beträgt der erste Winkel 221 zwischen 60 und 140°. Der zweite Winkel 222 beträgt beispielsweise zwischen 60 und 140°. Auch andere Winkelbeträge für den ersten Winkel 221 und den zweiten Winkel 222 sind möglich.

Die Verbindungswand 219 weist eine Wanddicke 220 auf, die insbesondere entlang der Querrichtung 211 gemessen ist. Die Wanddicke 220 ist zwischen dem Bodenelement 201 und dem Lagerkörper 202 beispielsweise unverändert gleich, wie beispielsweise in Figur 5 dargestellt ist. Gemäß weiteren Ausführungsbeispielen verändert sich die Wanddicke 220 zwischen dem Bodenelement 201 und dem Lagerkörper 202 wie beispielsweise in den Figuren 7 und 8 dargestellt ist. Insbesondere ist die Wanddicke 220 an dem Lagerkörper 202 größer als am Bodenelement 201. Dies ermöglicht einen guten Kraftfluss 214 und eine verlässliche Aufnahme von Kräften und Momenten aus dem Lagerkörper 202 mittels des Abstützkörpers 203.

Figur 9 zeigt das Rotorlagergehäuse 200 im betriebsfertigen Zustand gemäß einem Ausführungsbeispiel. Innerhalb des Lagerkörpers 202 ist die Rotorwelle 109 angeordnet. Zwischen der Rotorwelle 109 und dem Lagerkörper 202 sind das erste Rotorlager 207 und das zweite Rotorlager 210 vorgesehen, um die Rotation der Rotorwelle 109 relativ zu dem Lagerkörper 202 zu ermöglichen. Das erste Rotorlager 207 ist der Rotornabe 112 zugewandt. Das zweite Rotorlager 210 ist entlang der Querrichtung 211 der Rotornabe 112 abgewandt.

Das Rotorlagergehäuse 200 ist an dem Bodenelement 201 eines Azimutsystems befestigt. Das Azimutsystem umfasst unter anderem das Bodenelement 201, ein Azimutlager 227 und Azimutantriebe (nicht dargestellt), die auf dem Bodenelement 201 montiert sind. Das Azimutsystem ermöglicht eine Rotation des Rotorlagergehäuses 200 und der Gondel 106 um den Turm 102.

Mittels des Azimutsystems ist das Rotorlagergehäuse 200 an dem ersten Ende 103 des Turms 102 drehbar befestigt, insbesondere an einem sogenannten Turmanschluss.

Der Turm 102 weist an seinem ersten Ende 103 einen Durchmesser 230 auf. Ein Abstand 229 zwischen den Rotorlagern 207, 210 ist größer, als der Durchmesser 230. Der Abstand 229 zwischen den geometrischen Mittelpunkten 240, 241 der Rotorlager 207, 210 ist größer, als der Durchmesser 230. Der Abstand 229 zwischen den Rotorlagern 207, 210 ist insbesondere der Abstand zwischen den geometrischen Mittelpunkten 240, 241 der beiden Rotorlager 207, 210 entlang der Querrichtung 211 (Figur 2). Der geometrische Mittelpunkt 240 des ersten Rotorlagers 207 ist in Projektion auf eine Querschnittsebene 228 des ersten Endes 103 des Turms 102 außerhalb des Turms 102 angeordnet, insbesondere entlang der Querrichtung 211 vor dem Turm 102. Entsprechend ist die erste Aufnahme 206 in der Querschnittsebene 228 zumindest an der dem Turm 102 zugewandten Seite des Lagerkörpers 202 außerhalb des Turmquerschnitts angeordnet.

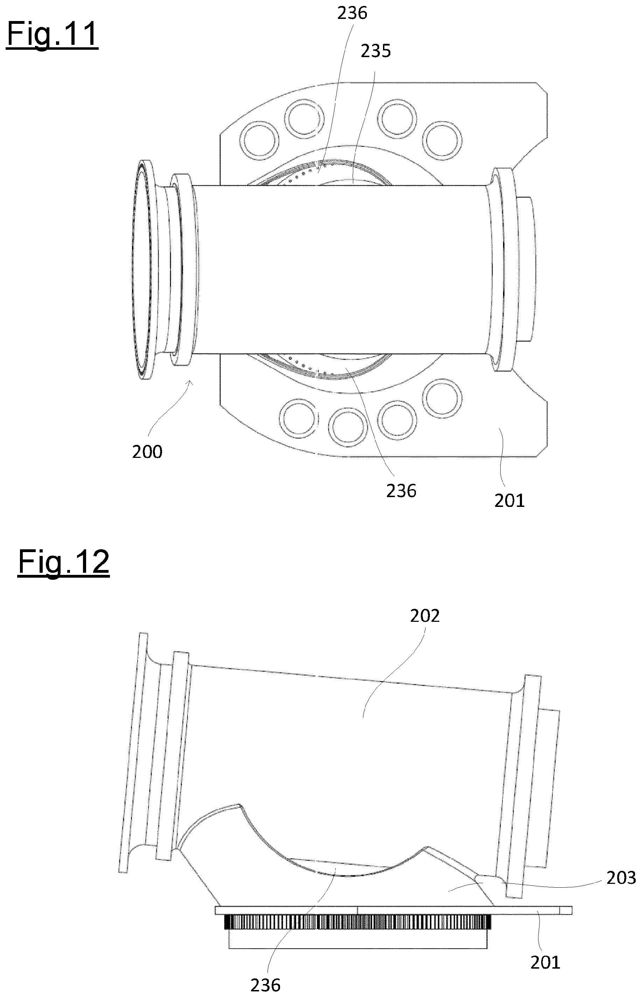

Figuren 10 bis 12 zeigen eine schematische Darstellung des Rotorlagergehäuses 200 gemäß einem weiteren Ausführungsbeispiel.

In dem Bodenelement 201 ist eine erste Einstiegsöffnung 235 ausgebildet, die einen Einstieg unter das Rotorlagergehäuse Lagerkörper 200 aus Richtung des Turms 102 ermöglicht. Das Bodenelement 201 umgibt entlang der Querrichtung 211 die erste Einstiegsöffnung 235.

An dem Abstützkörper 203 ist eine zweite Einstiegsöffnung 236 ausgebildet beziehungsweise zwei weitere Einstiegsöffnungen 236. Die weitere Einstiegsöffnung 236 ermöglicht einen Einstieg aus dem Abstützkörper 203 in die Gondel 106. Die weitere Einstiegsöffnung 236 ist insbesondere zwischen dem Lagerkörper 202 und dem Abstützkörper 203 ausgebildet. Somit ist eine vollumfängliche Verbindung zwischen dem Abstützkörper 203 und dem Bodenelement 201 am ersten Ende 216 des Abstützkörpers 203 ermöglicht, die insbesondere nicht durch eine Einstiegsöffnung unterbrochen ist. Dies ermöglicht eine zuverlässige Übertragung der Kräfte zwischen dem Abstützkörper 203 und dem Bodenelement 201.

Figuren 13 und 14 zeigen das Rotorlagergehäuse 200 gemäß einem weiteren Ausführungsbeispiel. Im Unterschied zu beispielsweise dem Rotorlagergehäuse 200 gemäß Figuren 9 und 10 sind die erste Aufnahme 206 und die zweite Aufnahme 209 des Lagerkörpers 202 breiter gestaltet. Die erste Aufnahme 206 und die zweite Aufnahme 209 werden insbesondere unmittelbar durch den Abstützkörper 203 abgestützt. Insbesondere ist der Lagerkörper 202 teilweise oder vollständig über die erste Aufnahme 206 und die zweite Aufnahme 209 durch den Abstützkörper 203 abgestützt. Der Abstützkörper 203 liegt insbesondere entlang der Längsrichtung 212 jeweils direkt unter den ersten und zweiten Aufnahme 206, 209. Somit ist es möglich, die Steifigkeit der Tragstruktur um die jeweiligen Rotorlager 207, 210 herum zu erhöhen. Dies ermöglicht eine günstigere Lastverteilung der Wälzkörper auf deren Laufbahn.

Die vertikale Projektion des geometrischen Mittelpunkts 238 des ersten Rotorlagers 207 beziehungsweise der ersten Aufnahme 206 befindet sich außerhalb des Turmdurchmessers 230. Beispielsweise ist der Abstand zwischen dem geometrischen Mittelpunkt 238 und dem Turmdurchmesser 230 kleiner als im Ausführungsbeispiel der Figuren 9 und 10. Beispielsweise ist ein Mindestabstand zwischen dem geometrischen Mittelpunkt 238 und dem Turmdurchmesser 230 in einem Bereich zwischen 2 cm und 50cm. Beispielsweise ist der erste Winkel 221 kleiner als im Ausführungsbeispiel der Figuren 9 und 10. Somit ist es möglich den Bereich des Abstützkörpers 203, der sich unter der ersten Aufnahme 209 befindet, mit einer höheren Steifigkeit auszubilden, was zu einer günstigeren Lastverteilung der Wälzkörper auf der Laufbahn im ersten Rotorlager 207 führt.

Die Wahl des Abstands zwischen dem geometrischen Mittelpunkts 238 des ersten Rotorlagers 207 und der Turmwand wird also insbesondere vorgegeben in Abhängigkeit von dem nutzbringenden Kraftfluss, dem ausreichen Abstand zwischen den Rotorblättern 110 und dem Turm 102 und der gewünschten Steifigkeit.

Die Auflagefläche des Abstützkörpers 203 auf dem Bodenelement 201 liegt beispielsweise direkt über einem Ring des Azimutlagers 227, beispielsweise entweder dem Innenring oder dem Außenring. Das zweite Ende 217 des Abstützkörpers 203 liegt beispielsweise direkt über einem Ring des Azimutlagers 227, beispielsweise entweder dem Innenring oder dem Außenring. Beispielsweise liegt das zweite Ende 217 des Abstützkörpers 203 direkt über dem drehbaren Ring des Azimutlagers 227. Somit ist ein guter Kraftfluss der Lasten vom Rotorlagergehäuse 200 in den Turm 102 möglich.

Figuren 15 und 16 zeigen das Rotorlagergehäuse 200 gemäß einem weiteren Ausführungsbeispiel. Im Unterschied zu beispielsweise dem Rotorlagergehäuse 200 gemäß Figuren 9 und 10 oder dem Rotorlagergehäuse 200 gemäß Figuren 13 und 14 weist das Rotorlagergehäuse 200 keinen geschlossenen zylinderförmigen oder kegelstumpfförmigen Lagerkörper 202 auf. Stattdessen ist der Lagerkörper 202 zumindest bereichsweise offen, insbesondere an seiner Unterseite. Beispielsweise weist der Lagerkörper 202 im Wesentlichen eine Halbzylinderform auf. Der Lagerkörper 202 und der Abstützkörper 203 gehen fließend ineinander über und laufen ineinander. Somit ist es möglich, die Einstiegsöffnung 235, 236 groß zu gestallten. Somit wird der Zugang in die Gondel 106 für das Wartungspersonal erleichtert. Somit können beispielsweise Gesundheits- und Sicherheitsrichtlinien verlässlich erfüllt werden. Der offene Lagerkörper 202 ermöglicht einen einfachen Zugang zu den Rotorlagern 207, 210, beispielweise für Wartungsarbeiten wie Dichtungstausch.

Das Rotorlagergehäuse 200 in den unterschiedlichen Ausführungsformen ermöglicht eine gute Formstabilität aufgrund günstiger Steifigkeitsverteilung. Insbesondere ist es möglich, die verschiedenen Merkmale, die in Bezug auf die unterschiedlichen Figuren erläutert wurden, figurenübergreifend miteinander zu kombinieren. Die unterschiedlichen Neigungen und Winkel der Verbindungswand 219 sind beispielsweise mit der sich ändernden oder gleichbleibenden Wanddicke 220 kombinierbar.

Das Rotorlagergehäuse ermöglicht geschlossene Strukturen, wie den geschlossenen Lagerkörper 202 (beispielsweise Figuren 2 bis 14), der die Rotorwelle 109 umfänglich vollständig umgibt. Alternativ ermöglicht das Rotorlagergehäuse offene Strukturen, wie den offenen Lagerkörper 202 (beispielsweise Figuren 15 und 16), der die Rotorwelle 109 umfänglich nur teilweise umgibt.

Aufgrund der vergleichsweise großen Abstände 224 beziehungsweise 229 sind große Stützweiten zur Übertragung der Kräfte und Momente von dem Lagerkörper 202 in dem Turm 102 möglich. Die Rotorlager 207, 210 können bereits vor der Montage an dem Turm 102 in dem Rotorlagergehäuse 200 vormontiert werden. Das Rotorlagergehäuse 200 ermöglicht eine angestellte Lagerung, die in axialer Richtung steif genug ist, um die Rotorlager 207, 210 zu verspannen. Die Rotorlager 207, 210, die beispielsweise Kegelrollenlager sind, sind im Lagerkörper 202 ausreichend stabil entlang der Querrichtung 211 abgestützt.

Der Lagerkörper 202 weist beispielsweise an der ersten Aufnahme 206 und an der zweiten Aufnahme 209 einen anderen Durchmesser auf, als zwischen den beiden Aufnahmen 206, 209. Der Durchmesser des Lagerkörpers 202 entlang der Achsrichtung 213 muss nicht gleich sein, sondern kann sich verändern.

Die Kombination des hohlzylinderförmigen bzw. hohlkegelstumpfförmigen Lagerkörpers 202 und des im Querschnitt 218 ellipsenförmigen Abstützkörpers 203 ermöglicht eine große radiale und axiale Steifigkeit des gesamten Rotorlagergehäuses 200. Dies ermöglicht auch eine Stabilisierung und Unterstützung des Azimutlagers im Azimutsystem. Der Lagerkörper 202 ist beispielsweise vorrangig für eine axiale Versteifung vorgesehen und der Abstützkörper 203 vorranging für eine radiale Versteifung. Die Kontur der Verbindungswand 219 ergibt sich durch die Verbindung zwischen der elliptischen Grundform beim Querschnitt 218 des Abstützkörpers 203 und im Kreisring am ersten Ende 216 des Abstützkörpers 203. Je nach Verschiebung und Ausprägung der elliptischen Grundform ergeben sich unterschiedliche Konturen der Verbindungswand 219 und des Abstützkörpers 203.

Das Rotorlagergehäuse 200 in den verschiedenen Ausführungsformen ermöglicht einen verlässlichen Kraftfluss 214 von den Rotorlagern 207, 210 durch den Lagerkörper 202, den Abstützkörper 203 in das Bodenelement 201. Der Kraftfluss wird dann von dem Bodenelement durch das Azimutsystem in den Turm 102 weitergeleitet. Aufgrund der vorspringenden Anordnung der ersten Aufnahme 206 beziehungsweise des ersten Rotorlagers 207 ist eine verlässliche Abstützung der Rotorwelle 109 realisiert.

### Bezugszeichen

- 100: Windenergieanlage
- 101: einströmender Wind
- 102: Turm
- 103: erstes Ende des Turms
- 104: Fundament
- 105: zweites Ende des Turms
- 106: Gondel
- 108: Rotor
- 109: Rotorwelle
- 110: Rotorblatt
- 112: Rotornabe
- 200: Rotorlagergehäuse
- 201: Bodenelement
- 202: Lagerkörper
- 203: Abstützkörper
- 204: Haupterstreckungsebene
- 205: erstes Ende des Lagerkörpers
- 206: erste Aufnahme
- 207: erstes Rotorlager
- 208: zweites Ende des Lagerkörpers
- 209: zweite Aufnahme
- 210: zweites Rotorlager
- 211: Querrichtung
- 212: Längsrichtung
- 213: Drehachse, Achsrichtung
- 214: Kraftflusses
- 215: Körper
- 216: erstes Ende des Abstützkörpers
- 217: zweites Ende des Abstützkörpers
- 218: Querschnitt
- 219: Verbindungswand
- 220: Wanddicke
- 221: erster Winkel
- 222: zweiter Winkel
- 223: erste Richtung
- 224: Abstand zwischen den Aufnahmen
- 226, 231: Abstand zwischen Aufnahme und Querschnittsebene
- 227: Azimutlager
- 228: Querschnittsebene des Turms
- 229: Abstand zwischen den Lagern
- 230: Durchmesser des Turms am ersten Ende
- 232, 233: Mittelpunkt
- 235, 236: Einstiegsöffnung
- 237: vorspringender Bereich über dem Bodenelement
- 238: geometrischer Mittelpunkt der ersten Aufnahme
- 239: geometrischer Mittelpunkt der zweiten Aufnahme
- 240: geometrischer Mittelpunkt des ersten Lagers
- 241: geometrischer Mittelpunkt des zweiten Lagers
- 242: vorspringender Bereich über dem ersten Ende des Turms
- 250: Rotorarretiervorrichtung

## Patentansprüche

1. Rotorlagergehäuse für eine Windenergieanlage (100), aufweisend:
- einen Lagerkörper (202) zur Aufnahme einer Rotorwelle (109) der Windenergieanlage (100), die sich um eine Drehachse (213) dreht, wobei der Lagerkörper (202) an einem ersten Ende (205) eine erste Aufnahme (206) für ein erstes Rotorlager (207) aufweist und an einem entlang einer Achsrichtung (213) gegenüberliegenden zweiten Ende (208) eine zweite Aufnahme (209) für ein zweites Rotorlager (210) aufweist, wobei der Lagerkörper (202) sich länglich entlang der Achsrichtung (213) erstreckt,
- einen Abstützkörper (203), der eine Verbindungswand (219) aufweist, die einen Hohlraum umgibt, der unter dem Lagerkörper (202) angeordnet ist und der ausgebildet ist, an einem ersten Ende (216) mit einem Bodenelement (201) gekoppelt zu werden, um einen Kraftfluss (214) zwischen dem Lagerkörper (202) und dem Bodenelement (201) zu übertragen, wobei das Bodenelement unter dem Abstützkörper (203) zur drehbaren Befestigung an einem ersten Ende (103) eines Turms (102) der Windenergieanlage (100) anordenbar ist,
wobei der Lagerkörper (202) und der Abstützkörper (203) gemeinsam einen einstückigen Körper (215) ausbilden und, wobei der Lagerkörper (202) und der Abstützkörper (203) so ausgebildet sind, dass, wenn ein geometrischer Mittelpunkt (238) der ersten Aufnahme (206) auf eine Querschnittsebene (228) des ersten Endes (103) des Turms (102) projiziert ist, der geometrische Mittelpunkt (238) außerhalb eines Durchmessers (230) des Turms (102) an dem ersten Ende (103) angeordnet ist, und
wobei die erste Aufnahme (206) und die zweite Aufnahme (209) unmittelbar durch den Abstützkörper (203) abgestützt sind, wobei der Lagerkörper (202) teilweise oder vollständig mittels der ersten Aufnahme (206) und der zweiten Aufnahme (209) durch den Abstützkörper (203) abgestützt ist.

2. Rotorlagergehäuse nach Anspruch 1, bei dem der Abstützkörper (203) an dem mit dem Bodenelement (201) verbindbaren ersten Ende (216) eine kreissymmetrische Form aufweist und bei Querschnitten (218) über dem ersten Ende (216) und parallel zum Bodenelement (201) eine elliptische Grundform aufweist.

3. Rotorlagergehäuse nach Anspruch 2, bei dem der Abstützkörper (203) eine Verbindungswand (219) aufweist, die sich zwischen dem ersten Ende (216) und einem dem Lagerkörper (202) zugewandten zweiten Ende (217) des Abstützkörpers (203) erstreckt, wobei die Verbindungswand (219) auf der Seite der ersten Aufnahme (206) einen ersten Winkel (221) zu einer Haupterstreckungsebene (204) des Bodenelements (201) aufweist und auf der Seite der zweiten Aufnahme (209) einen zweiten Winkel (222) zu der Haupterstreckungsebene (204) aufweist, wobei die beiden Winkel (221, 222) zueinander unterschiedlich sind.

4. Rotorlagergehäuse nach einem der Ansprüche 1 bis 3, bei dem der Abstützkörper (203) an der ersten Aufnahme (206) zwischen dem ersten Ende (216) des Abstützkörpers (203) und dem Lagerkörper (202) in eine erste Richtung (223) geneigt ausgerichtet ist und der Abstützkörper (203) an der zweiten Aufnahme (209) ebenfalls in die erste Richtung (223) geneigt ausgerichtet ist.

5. Rotorlagergehäuse nach einem der Ansprüche 1 bis 4, bei dem der geometrische Mittelpunkt (238) der ersten Aufnahme (206) und ein geometrischer Mittelpunkt (239) der zweiten Aufnahme (209) entlang einer Querrichtung (211) einen Abstand (224) zueinander aufweisen, wobei der Abstand (224) mindestens so groß wie ein Durchmesser (230) des Turms (102) am ersten Ende (103) des Turms (102) ist.

6. Rotorlagergehäuse nach einem der Ansprüche 1 bis 5, bei dem der geometrische Mittelpunkt (238) der ersten Aufnahme (206) einen größeren Abstand (226) zu der Querschnittsebene (228) des ersten Endes (103) aufweist als der geometrische Mittelpunkt (239) der zweiten Aufnahme (209).

7. Rotorlagergehäuse nach einem der Ansprüche 1 bis 6, bei dem die Projektion des geometrischen Mittelpunkts (238) der ersten Aufnahme (206) und eine Projektion des geometrischen Mittelpunkts (239) der zweiten Aufnahme (209) auf die Querschnittsebene (228) jeweils außerhalb des Durchmessers (230) des Turms (102) an dem ersten Ende (103) angeordnet sind.

8. Rotorlagergehäuse nach einem der Ansprüche 1 bis 7, bei dem der Abstützkörper (203) eine Einstiegsöffnung (236) aufweist, die zwischen dem Lagerkörper (202) und dem Abstützkörper (203) angeordnet ist.

9. Rotorlagergehäuse nach einem der Ansprüche 1 bis 8, bei dem der Lagerkörper (202) zumindest bereichsweise offen ist, insbesondere an seiner Unterseite, wobei der Lagerkörper (202) und der Abstützkörper (203) fließend ineinander übergehen und ineinander laufen.

10. Windenergieanlage, aufweisend:
- einen Turm (102),
- eine Gondel (106),
- einen Rotor (108) mit einer Rotorwelle (109),
- ein Rotorlagergehäuse (200) nach einem der Ansprüche 1 bis 9, das in der Gondel (106) angeordnet ist und an einem ersten Ende (103) des Turms (102) an dem Turm (102) drehbar befestigt ist, wobei
- die Rotorwelle (109) sich durch den Lagerkörper (202) hindurch erstreckt, die erste Aufnahme (206) dem Rotor (108) zugewandt ist und die zweite Aufnahme (209) dem Rotor (108) abgewandt ist.

11. Windenergieanlage nach Anspruch 10, bei der in der ersten Aufnahme (206) das erste Rotorlager (207) angeordnet ist, wobei, wenn ein geometrischer Mittelpunkt (240) des ersten Rotorlagers (207) auf eine Querschnittsebene (228) des ersten Endes (103) des Turms (102) projiziert ist, der geometrische Mittelpunkt (240) des ersten Rotorlagers (207) am ersten Ende (103) des Turms (102) außerhalb des Turms (102) angeordnet ist.

12. Windenergieanlage nach einem der Ansprüche 10 oder 11, bei der der Lagerkörper (202) die Rotorwelle (109) umschließt.

13. Windenergieanlage nach einem der Ansprüche 10 bis 12, bei der das zweite Rotorlager (210) in der zweiten Aufnahme (209) angeordnet ist und das Rotorlagergehäuse (200) so ausgebildet ist, dass ein Abstand (229) zwischen dem geometrischen Mittelpunkt (240) des ersten Rotorlagers (207) und einem geometrischen Mittelpunkt (241) des zweiten Rotorlagers (210) mindestens so groß wie ein Durchmesser (230) des Turms (102) am ersten Ende (103) des Turms (102).

14. Windenergieanlage nach einem der Ansprüche 10 bis 13, aufweisend das Bodenelement (201), wobei das Bodenelement (201) einem Azimutsystem zugeordnet ist, das zum drehbaren Befestigen des Rotorlagergehäuses (200) an dem ersten Ende (103) des Turms (102) vorgesehen ist.

15. Rotorlageranordnung, aufweisend:
- ein Rotorlagergehäuse nach einem der Ansprüche 1 bis 9,
- ein erstes Rotorlager (207), das in der ersten Aufnahme (206) angeordnet ist, und ein zweites Rotorlager (208), das in der zweiten Aufnahme (209) angeordnet ist, zur Lagerung der Rotorwelle (109), wobei das erste Rotorlager (207) und das zweite Rotorlager (208) jeweils Wälzlager sind, insbesondere Kegelrollenlager oder Schrägkugellager.

## Claims

1. A rotor bearing housing for a wind turbine (100), comprising:
- a bearing body (202) for receiving a rotor shaft (109) of the wind turbine (100) rotating about an axis of rotation (213), the bearing body (202) comprising a first receptacle (206) for a first rotor bearing (207) at a first end (205) and a second receptacle (209) for a second rotor bearing (210) at a second end (208) opposite along an axis direction (213), the bearing body (202) extending longitudinally along the axis direction (213),
- a support body (203) comprising a connecting wall (219) surrounding a cavity which is arranged below the bearing body (202) and designed to be coupled to a base member (201) at a first end (216) for transmitting a flux of force (214) between the bearing body (202) and the base member (201), the base member being able to be arranged below the support body (203) for rotatably fastening to a first end (103) of a tower (102) of the wind turbine (100),
wherein the bearing body (202) and the support body (203) together form a one-piece body (215), and wherein the bearing body (202) and the support body (203) are designed such that when a geometric center (238) of the first receptacle (206) is projected onto a cross-sectional plane (228) of the first end (103) of the tower (102), the geometric center (238) is arranged outside a diameter (230) of the tower (102) at the first end (103), and
wherein the first receptacle (206) and the second receptacle (209) are directly supported by the support body (203), the bearing body (202) being partially or fully supported by the support body (203) by means of the first receptacle (206) and the second receptacle (209).

2. The rotor bearing housing according to claim 1, in which the support body (203) has a circularly symmetric shape at the first end (216) connectable to the base member (201) and has an elliptical basic shape at cross-sections (218) above the first end (216) and parallel to the base member (201).

3. The rotor bearing housing according to claim 2, in which the support body (203) comprises a connecting wall (219) extending between the first end (216) and a second end (217) of the support body (203) facing the bearing body (202), the connecting wall (219) comprising, on the side of the first receptacle (206), a first angle (221) to a main extension plane (204) of the base member (201) and, on the side of the second receptacle (209), a second angle (222) to the main extension plane (204), the two angles (221, 222) being different from each other.

4. The rotor bearing housing according to any of claims 1 to 3, in which the support body (203) at the first receptacle (206) between the first end (216) of the support body (203) and the bearing body (202) is oriented so as to be inclined in a first direction (223), and the support body (203) at the second receptacle (209) is likewise oriented so as to be inclined in the first direction (223).

5. The rotor bearing housing according to any of claims 1 to 4, in which the geometric center (238) of the first receptacle (206) and a geometric center (239) of the second receptacle (209) are spaced apart from each other along a transverse direction (211) by a distance (224), the distance (224) being at least as large as a diameter (230) of the tower (102) at the first end (103) of the tower (102).

6. The rotor bearing housing according to any of claims 1 to 5, in which the geometric center (238) of the first receptacle (206) has a greater distance (226) to the cross-sectional plane (228) of the first end (103) than the geometric center (239) of the second receptacle (209).

7. The rotor bearing housing according to any of claims 1 to 6, in which the projection of the geometric center (238) of the first receptacle (206) and a projection of the geometric center (239) of the second receptacle (209) onto the cross-sectional plane (228) are each arranged outside the diameter (230) of the tower (102) at the first end (103).

8. The rotor bearing housing according to any of claims 1 to 7, in which the support body (203) comprises an entry opening (236) arranged between the bearing body (202) and the support body (203).

9. The rotor bearing housing according to any of claims 1 to 8, in which the bearing body (202) is open at least in certain areas, in particular on its underside, the bearing body (202) and the support body (203) merging smoothly and running into each other.

10. A wind turbine, comprising:
- a tower (102),
- a nacelle (106),
- a rotor (108) having a rotor shaft (109),
- a rotor bearing housing (200) according to any of claims 1 to 9, which is arranged in the nacelle (106) and rotatably fastened to the tower (102) at a first end (103) of the tower (102), wherein
- the rotor shaft (109) extends through the bearing body (202), the first receptacle (206) faces the rotor (108), and the second receptacle (209) faces away from the rotor (108).

11. The wind turbine according to claim 10, in which the first rotor bearing (207) is arranged in the first receptacle (206), wherein, when a geometric center (240) of the first rotor bearing (207) is projected onto a cross-sectional plane (228) of the first end (103) of the tower (102), the geometric center (240) of the first rotor bearing (207) is arranged outside the tower (102) at the first end (103) of the tower (102).

12. The wind turbine according to any of claims 10 or 11, in which the bearing body (202) encloses the rotor shaft (109).

13. The wind turbine according to any of claims 10 to 12, in which the second rotor bearing (210) is arranged in the second receptacle (209) and the rotor bearing housing (200) is designed such that a distance (229) between the geometric center (240) of the first rotor bearing (207) and a geometric center (241) of the second rotor bearing (210) is at least as large as a diameter (230) of the tower (102) at the first end (103) of the tower (102).

14. The wind turbine according to any of claims 10 to 13, comprising the base member (201), the base member (201) being associated to an azimuthal system provided for rotatably fastening the rotor bearing housing (200) to the first end (103) of the tower (102).

15. A rotor bearing assembly, comprising:
- a rotor bearing housing according to any of claims 1 to 9,
- a first rotor bearing (207) arranged in the first receptacle (206) and a second rotor bearing (208) arranged in the second receptacle (209), for supporting the rotor shaft (109), wherein the first rotor bearing (207) and the second rotor bearing (208) are each roller bearings, in particular tapered roller bearings or angular contact ball bearings.

## Revendications

1. Boîtier de roulement de rotor pour une éolienne (100), présentant :
- un corps de roulement (202) destiné à loger un arbre de rotor (109) de l'éolienne (100) qui tourne autour d'un axe de rotation (213), sachant que le corps de roulement (202) présente un premier logement (206) pour un premier roulement de rotor (207) à une première extrémité (205) et présente un deuxième logement (209) pour un deuxième roulement de rotor (210) à une deuxième extrémité (208) opposée le long d'une direction d'axe (213), sachant que le corps de roulement (202) s'étend longitudinalement le long de la direction d'axe (213),
- un corps de soutien (203) présentant une paroi de liaison (219) entourant une cavité qui est disposé sous le corps de roulement (202) et est constitué pour être couplé à un élément de fond (201) à une première extrémité (216) pour transmettre un flux de force (214) entre le corps de roulement (202) et l'élément de fond (201), sachant que l'élément de fond peut être disposé sous le corps de soutien (203) pour la fixation rotative à une première extrémité (103) d'une tour (102) de l'éolienne (100),
sachant que le corps de roulement (202) et le corps de soutien (203) constituent ensemble un corps (215) d'une seule pièce, et
sachant que le corps de roulement (202) et le corps de soutien (203) sont constitués de telle sorte que, lorsqu'un centre géométrique (238) du premier logement (206) est projeté sur un plan de section transversale (228) de la première extrémité (103) de la tour (102), le centre géométrique (238) soit disposé en dehors d'un diamètre (230) de la tour (102) à la première extrémité (103), et
sachant que le premier logement (206) et le deuxième logement (209) sont soutenus directement par le corps de soutien (203), sachant que le corps de roulement (202) est en partie ou entièrement soutenu par le corps de soutien (203) moyennant le premier logement (206) et le deuxième logement (209).

2. Le boîtier de roulement de rotor selon la revendication 1, dans lequel le corps de soutien (203), à la première extrémité (216) pouvant être reliée à l'élément de fond (201), présente une forme circulairement symétrique, et présente une forme de base elliptique pour les sections transversales (218) au-dessus de la première extrémité (216) et parallèlement à l'élément de fond (201).

3. Le boîtier de roulement de rotor selon la revendication 2, dans lequel le corps de soutien (203) présente une paroi de liaison (219) qui s'étend entre la première extrémité (216) et une deuxième extrémité (217) du corps de soutien (203) tournée vers le corps de roulement (202), sachant que la paroi de liaison (219) présente un premier angle (221) par rapport à un plan d'extension principal (204) de l'élément de fond (201) du côté du premier logement (206) et présente un deuxième angle (222) par rapport au plan d'extension principal (204) du côté du deuxième logement (209), sachant que les deux angles (221, 222) sont différents l'un de l'autre.

4. Le boîtier de roulement de rotor selon l'une des revendications 1 à 3, dans lequel le corps de soutien (203) est orienté de manière inclinée dans une première direction (223) au niveau du premier logement (206) entre la première extrémité (216) du corps de soutien (203) et le corps de roulement (202), et le corps de soutien (203) est également orienté de manière inclinée dans la première direction (223) au niveau du deuxième logement (209).

5. Le boîtier de roulement de rotor selon l'une des revendications 1 à 4, dans lequel le centre géométrique (238) du premier logement (206) et un centre géométrique (239) du deuxième logement (209) présentent une distance (224) l'un par rapport à l'autre le long d'une direction transversale (211), sachant que la distance (224) est au moins aussi grande qu'un diamètre (230) de la tour (102) à la première extrémité (103) de la tour (102).

6. Le boîtier de roulement de rotor selon l'une des revendications 1 à 5, dans lequel le centre géométrique (238) du premier logement (206) présente une distance (226) plus grande par rapport au plan de section transversale (228) de la première extrémité (103) que le centre géométrique (239) du deuxième logement (209).

7. Le boîtier de roulement de rotor selon l'une des revendications 1 à 6, dans lequel la projection du centre géométrique (238) du premier logement (206) et une projection du centre géométrique (239) du deuxième logement (209) sur le plan de section transversale (228) sont disposées respectivement en dehors du diamètre (230) de la tour (102) à la première extrémité (103).

8. Le boîtier de roulement de rotor selon l'une des revendications 1 à 7, dans lequel le corps de soutien (203) présente une ouverture d'accès (236) qui est disposée entre le corps de roulement (202) et le corps de soutien (203).

9. Le boîtier de roulement de rotor selon l'une des revendications 1 à 8, dans lequel le corps de roulement (202) est ouvert au moins localement, en particulier au niveau de son côté inférieur, sachant que le corps de roulement (202) et le corps de soutien (203) se mêlent harmonieusement l'un avec l'autre et s'étendent l'un dans l'autre.

10. Éolienne, présentant :
- une tour (102),
- une nacelle (106),
- un rotor (108) avec un arbre de rotor (109),
- un boîtier de roulement de rotor (200) selon l'une des revendications 1 à 9, qui est disposé dans la nacelle (106) et est fixé à la tour (102) de manière rotative à une première extrémité (103) de la tour (102), sachant que
- l'arbre de rotor (109) s'étend à travers le corps de roulement (202), le premier logement (206) est tourné vers le rotor (108) et le deuxième logement (209) est tourné du côté opposé au rotor (108).

11. L'éolienne selon la revendication 10, dans laquelle le premier roulement de rotor (207) est disposé dans le premier logement (206), sachant que, lorsqu'un centre géométrique (240) du premier roulement de rotor (207) est projeté sur un plan de section transversale (228) de la première extrémité (103) de la tour (102), le centre géométrique (240) du premier roulement de rotor (207) est disposé en dehors de la tour (102) à la première extrémité (103) de la tour (102).

12. L'éolienne selon l'une des revendications 10 ou 11, dans laquelle le corps de roulement (202) entoure l'arbre de rotor (109).

13. L'éolienne selon l'une des revendications 10 à 12, dans laquelle le deuxième roulement de rotor (210) est disposé dans le deuxième logement (209) et le boîtier de roulement de rotor (200) est constitué de telle sorte qu'une distance (229) entre le centre géométrique (240) du premier roulement de rotor (207) et un centre géométrique (241) du deuxième roulement de rotor (210) soit au moins aussi grande qu'un diamètre (230) de la tour (102) à la première extrémité (103) de la tour (102).

14. L'éolienne selon l'une des revendications 10 à 13, présentant l'élément de fond (201), sachant que l'élément de fond (201) est associé à un système azimut qui est prévu pour la fixation rotative du boîtier de roulement de rotor (200) à la première extrémité (103) de la tour (102).

15. Agencement de roulement de rotor, présentant :
- un boîtier de roulement de rotor selon l'une des revendications 1 à 9,
- un premier roulement de rotor (207) qui est disposé dans le premier logement (206), et un deuxième roulement de rotor (208) qui est disposé dans le deuxième logement (209), pour le support de l'arbre de rotor (109), sachant que le premier roulement de rotor (207) et le deuxième roulement de rotor (208) sont respectivement des roulements mécaniques, en particulier des roulements à rouleaux coniques ou des roulements à billes à contact oblique.
